# EUROPÄISCHE PATENTSCHRIFT

(11) **EP 2 342 094 B1**
(45) Veröffentlichungstag und Bekanntmachung des Hinweises auf die Patenterteilung: **25.11.2015**
(21) Anmeldenummer: 09778022.5
(22) Anmeldetag: 21.08.2009
(51) Int. Cl.: B60G 15/06, B60G 17/015, B60G 17/02, F16F 9/04

(54) **RADAUFHÄNGUNG FÜR KRAFTFAHRZEUGE**
WHEEL SUSPENSION FOR MOTOR VEHICLES
SUSPENSION DE ROUE POUR VÉHICULES AUTOMOBILES

(30) Priorität: 29.10.2008 DE 102008053617
(43) Veröffentlichungstag der Anmeldung: 13.07.2011
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2009/006063
(87) Internationale Veröffentlichungsnummer: WO 2010/049026

(56) Entgegenhaltungen:
- EP-A- 1 953 013
- DE-A1- 10 306 121
- DE-U- 1 816 597
- JP-A- 60 094 879
- JP-U- 57 131 649
- JP-U- 57 141 247
- SU-A1- 1 216 475
- US-A1- 2006 125 325

## Beschreibung

Die Erfindung betrifft eine Radaufhängung für Kraftfahrzeuge mit Niveauverstellung der Karosserie gemäß dem Oberbegriff des Patentanspruches 1.

Durch die DE 30 37 179 ist es bei einer Teleskop-Stoßdämpfer-Anordnung für Radaufhängungen von Kraftfahrzeugen bekannt, die Kolbenstange mittels eines nach außen abgedichteten, gummielastischen Faltenbalges vor Schmutz und Feuchtigkeit zu schützen, wobei der Innenraum des Faltenbalges mit einem Zusatzvolumen verbunden ist. Das Zusatzvolumen ist dabei durch ein um das Dämpferrohr des Stoßdämpfers angeordnetes, gegebenenfalls ummittelbar an den Faltenbalg angeformtes Zylinderrohr gebildet.

Bei einer Stoßdämpferanordnung gemäß DE 725 687 sind zum Ausgleich von Druckschwankungen innerhalb der Faltenbälge zweier benachbart in einem Gehäuse angelenkter Teleskop-Stoßdämpfer die beiden Faltenbälge über eine Gehäuseverbindung zusammengeschlossen.

Aus der DE 102 00 608 A ist eine Stoßdämpferanordnung bekannt, bei der der Luftraum innerhalb des Faltenbalges über eine Leitung, welche in einem Luftfilter endet, mit der Umgebung in Verbindung steht. Bei Federbewegungen wird Luft entweder angesaugt oder ausgeschoben und passiert dabei den Luftfilter. Es soll vermieden werden, dass Sand und/oder Staubpartikel ins Innere des vom Faltenbalg abgegrenzten Raumes gelangen kann. Sand würde gewissermaßen zwischen der Federunterlage und der Federwindung als Schleifpaste wirken. In diesem Fall würde die Feder die Lebensdauer nicht erreichen und vorzeitig brechen:

Die aus der DE 102 00 608 A bekannte Lösung ist ausreichend für ein einfaches System, im Wesentlichen bestehend aus Feder und Federunterlage. Ein Nachteil besteht darin, dass sich der Filter je nach Einsatzfall, das heißt in welcher Umgebung sich das Fahrzeug bewegt, früher oder später zusetzt. Ist kein freier Luftdurchsatz mehr gegeben, wird der Faltenbalg in erster Linie kollabieren oder sogar platzen. Der größte Nachteil jedoch ist die Tatsache, dass der Filter keine feineren Partikel (kleiner als Sand) filtern kann. Würde man dieses Prinzip bei einer mechanischen Höhenverstellung, welche beispielsweise aus einem empfindlichen Kugelgewindetrieb besteht, anwenden, so würde dies nicht ausreichen. Das Fett des Kugelgewindetriebes darf keinesfalls verunreinigen, da auch kleinste Partikel das Fett in der Konsistenz so verändern würden, dass der Kugelgewindetrieb zerstört werden würde. Weiterhin ist der Filter nicht in der Lage, Feuchtigkeit, Kondenswasser oder Spritzwasser fernzuhalten. Feuchtigkeit würde Korrosion an den Wälzlagern und an der Spindel/Muttereinheit verursachen und den Kugelgewindetrieb ebenfalls zerstören.

Aus der DE 18 16 597 U ist eine gattungsgemäße Radaufhängung für ein Kraftfahrzeug bekannt, bei der als Höhenverstelleinrichtung ein Rollbalg vorgesehen ist, der im oberen Bereich einen Luftanschluss zum Be- und Entlüften aufweist. Der mit dem Rollbalg verwende Faltenbalg ist staubdicht ausgebildet. Damit beim Einfedern im Inneren des Faltenbalges Luftstauungen vermieden werden können, sind auf dem Faltenbalg Stutzen befestigt, auf die Schläuche aufgesetzt sind. An den Schlauchenden können vorteilhaft spiralförmige Rohre angebracht werden.

Aus der US 2006/125325 A1 ist eine weitere Radaufhängung für ein Kraftfahrzeug bekannt, bei der ein außerhalb des Faltenbalges positioniertes Zusatzvolumen durch einen mit dem vom Faltenbalg umschlossenen Innenraum verbundenen, gummielastischen Faltenbalg gebildet ist. Aus der EP-A-1 9953 013 ist eine weitere Höhenverstellvorrichtung für eine Radaufhängung bekannt, bei der die Radaufhängung ein Federbein aufweist, das einen Teleskop-Stoßdämpfer sowie eine zentrale Höheneinstelleinrichtung, eine Tragfeder und eine Speicherfeder umfasst.

Die Aufgabe der Erfindung ist es, eine Radaufhängung mit einer Höhenverstelleinrichtung und einem diese abdeckenden Faltenbalg derart weiterzubilden, dass bei baulich günstiger Anordnung ein steter Druckausgleich im Innenraum des Faltenbalges gewährleistet ist.

Diese Aufgabe wird erfindungsgemäß mit den Merkmalen des Patentenspruches 1 gelöst. Vorteilhafte Weiterbildungen der Erfindung sind den weiteren Patentansprüchen entnehmbar.

Erfindungsgemäß wird vargeschlagen, dass der von dem Faltenbalg umschlossene Innenraum mittelbar oder unmittelbar mit einem außerhalb des Faltenbalges positionierten Zusatzvolumen als Ausgleichsraum verbunden ist. Über das außerhalb positionierte Zusatzvolumen kann ohne bauliche Zwänge ein zuverlässiger Druckausgleich hergestellt werden; zugleich wird die innerhalb des Faltenbalges angeordnete Höhenverstelleinrichtung wirkungsvoll vor Schmutz- und Fremdpartikel-Eintrag geschützt.

Insbesondere kann das Zusatzvolumen durch einen mit dem Innenraum verbundenen, gummielastischen Faltenbalg gebildet sein, der kostengünstig herstellbar ist und über den ein nahezu widerstandsloser Luftaustausch stattfinden kann. Dadurch können auch unzulässige Verformungen des die Höhenverstelleinrichtung umschließenden Faltenbalges aufgrund von Druckschwankungen ausgeschlossen werden.

Erfindungsgemäß ist das, die Höhenverstelleinrichtung umströmende Luftvolumen hermetisch nach außen abgegrenzt. Ein Luftaustausch nach außen findet also nicht statt. Die Gefahr von eindringender Feuchtigkeit gibt es nicht. Wird zudem der Raum mit getrocknete Luft befüllt, scheidet auch Kondenswasserbildung aus. Möglich wird dies, indem das zweite, korrespondierende Luftvolumen mit dem Luftvolumen innerhalb des Faltenbalges ohne jegliche Drosselung gekoppelt ist. Wird das Fahrzeug in der Höhe verändert, wird je nach Richtung Luft in den Ausgleichsbalg geschoben oder abgezogen. Auch bei Temperaturänderungen wirkt der Ausgleichsbalg als Kompensationselement. Der Widerstand, den der Ausgleichsbalg beim Ausdehnen bzw. beim Zusammenziehen entgegensetzt, ist aufgrund den ziehharmonikaartigen Gestaltung äußerst gering.

Ist das Zusatzvolumen über eine Verbindungsleitung mit dem Innenraum des Faltenbalges verbunden, so können gegebenenfalls im Kraftfahrzeug vorhandene Freiräume günstig für die Anordnung und den Einbau des Zusatzvolumens genutzt werden.

Besonders vorteilhaft können der Faltenbalg und das Zusatzvolumen mit einem entfeuchteten Gas, insbesondere Luft, befüllt sein, um Funktionsstörungen und/oder Korrosionsschäden von den im Faltenbalg umschlossenen Bauteilen fernzuhalten.

Bei einer Radaufhängung mit einer an einem Hohlprofil eines Trägers der Karosserie des Kraftfahrzeuges abgestützten Höhenverstelleinrichtung ist erfindungsgemäß das Zusatzvolumen baulich besonders günstig unmittelbar in dem Träger angeordnet Insbesondere ist der Faltenbalg als Zusatzvolumen in dem Hohlraum des Trägers positioniert und somit zuverlässig gegen äußere Einflüsse, z. B. Steinschlag, geschützt.

Ein Ausführungsbeispiel der Erfindung ist im Folgenden mit weiteren Einzelheiten näher erläutert.

Die schematische Zeichnung zeigt in:

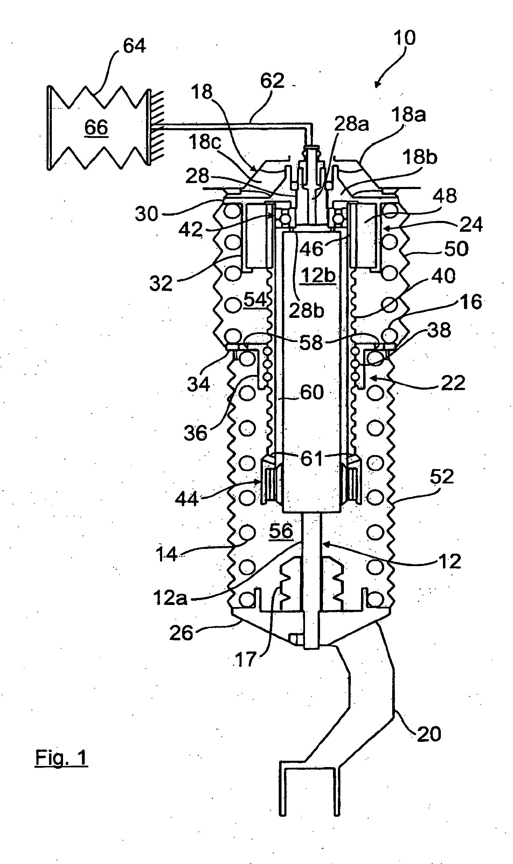

- Fig. 1: als ein nicht von der Erfindung umfasstes Vergleichsbeispiel ein Federbein für eine Radaufhängung von Kraftfahrzeugen, mit einer einen Teleskop-Stoßdämpfer umschließenden Tragfeder, einer Speicherfeder und einer zentralen Höhenverstelleinrichtung, sowie zwei die Federn und die Höhenverstelleinrichtung umschließende Faltenbälge, deren Innenraum mit einem außen liegenden Zusatzvolumen verbunden ist; und

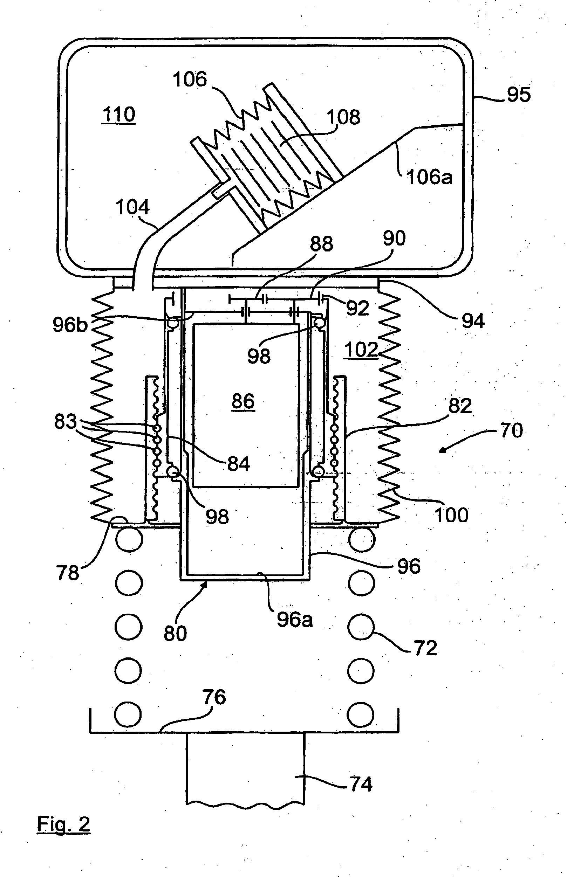

- Fig. 2: eine Höhenverstelleinrichtung an einer hinteren Radaufhängung für Kraftfahrzeuge, mit einer Tragfeder und einer zentralen Höhenverstelleinrichtung, die an einem Längsträger des Aufbaus des Kraftfahrzeuges abgestützt ist und mit einem im Längsträger positionierten Zusatzvolumen.

In der Fig. 1 ist schematisch ein aktives Federbein 10 für eine Radaufhängung von Kraftfahrzeugen dargestellt, das sich im Wesentlichen aus einem Teleskop-Stoßdämpfer 12, einer Tragfeder 14, einer Speicherfeder 16, einem oberen Dämpferlager 18 und einer unteren Dämpferstütze 20 zusammensetzt.

Eine Niveauverstellung der Karosserie des Kraftfahrzeuges und/oder eine Wank- und Nickstabilisierung wird gesteuert mittels einer Höhenverstelleinrichtung 22, die über einen Elektromotor 24 angetrieben ist.

Der Stoßdämpfer 12 ist mit seiner nach unten ragenden Kolbenstange 12a an einem unteren Federteller 26 befestigt. Der Federteller 26 bildet eine Baueinheit mit der Dämpferstütze 20, die in bekannter Weise an einem Radführungselement der Radaufhängung des Kraftfahrzeuges, z. B. einem Lenker oder einem Radträger, angelenkt oder befestigt ist. An dem Federteller 26 ist ferner ein gummielastischer Anschlagpuffer 17 als Zusatzfeder vorgesehen.

Das Dämpferrohr 12b des Stoßdämpfers 12 indes ist über einen zentrischen Anschlusszapfen 28 mit dem Dämpferlager 18 verbunden, dessen äußeres Lagergehäuse 18a mit dem nicht dargestellten Aufbau des Kraftfahrzeuges verschraubt ist.

Der über einen gummielastischen, ringförmigen Dämpferkörper 18c mit dem Lagergehäuse 18a verbundene Lagerkern 18b des Dämpferlagers 18 bildet mit einem oberen Federteller 30 und einem topfförmigen Gehäuseteil 32 eine Baueinheit, die konzentrisch an dem Anschlusszapfen 28 angeordnet ist.

Die Speicherfeder 16 stützt sich einerseits an dem oberen Federteller 30 und andererseits an einem Verstellfederteller 34 ab. Ferner stützt sich die in ihrer Vorspannkraft entgegengerichtete Tragfeder 14 an dem unteren Federteller 26 und ebenfalls an dem Verstellfederteller 34 ab.

Der Verstellfederteller 34 ist einstückig mit einer Gewindemutter 36 ausgeführt, die über Kugeln 38 in Axialrichtung formschlüssig mit einer Gewindespindel 40 der Höhenverstelleinrichtung 22 bzw. deren Kugelgewindetriebes in Eingriff ist.

Die Gewindespindel 40 wiederum ist über Wälzlager 42, 44 auf dem Anschlusszapfen 28 und dem Dämpferrohr 12b drehbar, jedoch axial unverschiebbar gelagert.

Ferner trägt die Gewindespindel 40 den Rotor 46 des Elektromotors 24, dessen Stator 48 unter Belassung eines geringfügigen Ringspaltes den Rotor 46 umschließt.

Um die Speicherfeder 16 und die Tragfeder 14 ist jeweils ein gummielastischer Faltenbalg 50, 52 angeordnet. Der obere Faltenbalg 50 ist an dem Federteller 30 und an dem Verstellfederteller 34 befestigt und schließt somit einen oberen Innenraum 54 ab. Des weiteren,ist der untere Faltenbalg 52 an dem unteren Federteller 26 und ebenfalls an dem Verstellfederteller 34 befestigt und bildet somit den darunter liegenden, abgeschlossenen Innenraum 56. Die Innenräume 54, 56 sind über Durchbrüche 58 in dem Verstellfederteller 34 miteinander verbunden.

In dem Anschlusszapfen 28 des Dämpferrohres 12b des Stoßdämpfers 12 ist eine zentrische Bohrung 28a vorgesehen, die über einen eingearbeiteten Querkanal 28b in einen Ringspalt 60 mündet, der zwischen dem Dämpferrohr 12b und der Gewindespindel 40 gebildet ist und der schließlich über Querbohrungen 61 in der Gewindespindel 40 mit dem Innenraum 56 des Faltenbalges 52 verbunden ist.

An die zentrische Bohrung 28a ist eine Verbindungsleitung 62 angeschlossen, die mit einem außerhalb der Faltenbälge 50, 52 positionierten, ein Zusatzvolumen 66 bildenden Faltenbalg 64 verbunden ist. Der Faltenbalg 64 ist in nicht dargestellter Weise an geeigneter Stelle an der Karosserie des Kraftfahrzeuges befestigt.

Die Innenräume 54, 56 und das Zusatzvolumen 66 sind mit einem entfeuchteten Gas, insbesondere Luft, befüllt.

Bei einem Durchfedern oder bei Niveauverstellungen der Radaufhängung mit entsprechender Kompression oder Entspannung der Federn 14, 16 kann über die Verbindung der Innenräume 54, 56 der Faltenbälge 50, 52 mit dem Zusatzvolumen 66 bzw. den gummielastischen Faltenbalg 64 ein Luftaustausch erfolgen der Druckschwankungen innerhalb der Faltenbälge 50, 52 ausgleicht und unerwünschte Verformungen verhindert. Zugleich wird durch die geschlossene Ausbildung der Faltenbälge 50, 52 und des Zusatzvolumens 66 zuverlässig vermieden, dass Feuchtigkeit und Schmutz in die Höhenverstellvorrichtung 22 und den Elektromotor 24 eingetragen werden.

Der Luftaustausch erfolgt von den miteinander über die Durchbrüche 58 im Verstellfederteller 34 verbundenen Innenräumen 54, 56 über die Querbohrungen 61, den Ringspalt 60, den Querkanal 28b und die zentrale Bohrung 28a in die Verbindungsleitung 62 und von dieser in das Zusatzvolumen 66 des Faltenbalges 64.

Die **Fig. 2** zeigt ein Ausführungsbeispiel der Erfindung an einer hinteren Radaufhängung 70 für Kraftfahrzeuge, die nur soweit dargestellt und beschrieben ist, als dies für das Verständnis der vorliegende Erfindung erforderlich ist.

Dabei ist eine als Schraubendruckfeder ausgeführte Tragfeder 72 zwischen einem unteren, an einem Lenker 74 als Radführungselement befestigten Federteller 76 und einem Verstellfederteller 78 einer Höhenverstelleinrichtung 80 eingespannt.

Die Höhenverstelleinrichtung 80 setzt sich im Wesentlichen zusammen aus einem Kugelgewindetrieb mit einer unverdrehbar am Verstellfederteller 78 befestigten Gewindehülse 82, einer über Kugeln 83 trieblich mit der-Gewindehülse 82 verbundenen Kugelmutter- 84 und einem zentral angeordneten Elektromotor 86, der über einen Stirnzahnradtrieb mit Zahnrädern 88, 90 einen innenverzahnten Zahnkranz 92 antreibt, wobei der Zahnkranz 92 mit der Kugelmutter 84 ein einheitliches Bauteil bildet.

Die Höhenverstelleinrichtung 80 weist ferner eine Tragplatte 94 auf, mittels der sie an einem ein Hohlprofil bildenden Längsträger 95 des tragenden Aufbaus der Karosserie des Kraftfahrzeuges mittels nicht dargestellter Schrauben fest verschraubt ist.

An der Tragplatte 94 ist ein unten durch einen Boden 96a verschlossener Führungszylinder 96 befestigt, auf dem die Kugelmutter 84 und der Zahnkranz 92 über Wälzlager 98 drehbar gelagert sind. In einer Zwischenwand 96b des Führungszylinders 96 sind die Antriebswelle des Elektromotors 86 mit dem Zahnrad 88 und das Zwischen-Zahnrad 90 drehbar gelagert, die mit dem abtreibenden Zahnkranz 92 zusammenwirken.

Mittels des Elektromotors 86 kann über den Stirnzahnradtrieb 88, 90, 92 die Kugelmutter 84 verdreht werden, wodurch der unverdrehbar gehaltene Verstellfederteller 78 axial nach oben oder unten verschoben wird und den Fahrzeugaufbau mehr oder weniger anhebt oder absenkt.

Zwischen dem Außenumfang der Tragplatte 94 und dem an dem Führungszylinder 96 axial geführten Verstellfederteller 78 ist ein gummielastischer Faltenbalg 100 befestigt, der die Höhenverstelleinrichtung 80 umschließt und einen luftdichten Innenraum 102 in Verbindung mit dem Verstellfederteller 78 bildet.

Der Innenraum 102 ist über eine an die Tragplatte 94 anschließende Verbindungsleitung 104 und einem gummielastischen Faltenbalg 106 an ein Zusatzvolumen 108 angeschlossen. Der Faltenbalg 106 ist dabei an einer im Längsträger 95 vorgesehenen Halterung 106a befestigt.

Über den elastischen Faltenbalg 106 kann bei Volumenänderungen in dem Innenraum 102 unter Vermeidung von den Faltenbalg 100 verformenden Druckschwankungen ein steter Luftaustausch erfolgen. Trotzdem ist der Innenraum 102 bzw. die Höhenverstelleinrichtung 80 gegen äußere Umwelteinflüsse wie Feuchtigkeit oder Schmutzpartikel geschützt.

Die im Innenraum 102 und im Zusatzvolumen 108 befindliche Luft kann wiederum entfeuchtet sein.

## Patentansprüche

1. Radaufhängung für Kraftfahrzeuge mit Niveauverstellung der Karosserie, mit einer zwischen einem Radführungselement und dem Aufbau des Kraftfahrzeuges angeordneten Höhenverstelleinrichtung (80), die insbesondere als elektromotorisch betätigter Kugelgewindetrieb ausgebildet ist und auf einen Verstellfederteller (34) zumindest einer Tragfeder (72) wirkt, wobei die Höhenverstelleinrichtung (80) mittels zumindest eines umschließenden, gummielastischen Faltenbalges (100) nach außen abgedichtet ist, wobei der von dem Faltenbalg (100) umschlossene Innenraum (102) mittelbar oder unmittelbar mit einem außerhalb des Faltenbalges (100) positionierten Zusatzvolumen (108) als Ausgleichsraum, verbunden ist, **dadurch gekennzeichnet, dass** bei einer Radaufhängung (70) mit einer an einem Hohlprofil eines Trägers (95) der Karosserie des Kraftfahrzeuges abgestützten Höhenverstelleinrichtung (80) das Zusatzvolumen (108) unmittelbar in dem Träger (95) angeordnet ist.

2. Radaufhängung nach Anspruch 1, **dadurch gekennzeichnet, dass** das Zusatzvolumen (108) durch einen mit dem Innenraum (102) verbundenen, gummielastischen Faltenbalg (106) gebildet ist.

3. Radaufhängung nach Anspruch 1 oder 2, **dadurch gekennzeichnet, dass** das Zusatzvolumen (108) über eine Verbindungsleitung (104) mit dem Innenraum (102) des Faltenbalges (106) verbunden ist.

4. Radaufhängung nach einem der vorhergehenden Ansprüche, **dadurch gekennzeichnet, dass** der Faltenbalg (106) und das Zusatzvolumen (108) mit einem entfeuchteten Gas, insbesondere Luft, befüllt sind.

5. Radaufhängung nach einem der vorhergehenden Ansprüche, **dadurch gekennzeichnet, dass** der Faltenbalg (106) als Zusatzvolumen (108) in dem Hohlraum des Trägers (95) angeordnet ist.

## Claims

1. Wheel suspension for motor vehicles with a level adjustment of the vehicle body, comprising a height adjusting device (80) arranged between a wheel guide element and the structure of the motor vehicle, said height adjusting device being configured in particular as a ball screw drive activated by electric motor and acting on an adjusting plate spring (34) of at least one suspension spring (72), wherein the height adjusting device (80) is sealed externally by means of a least one enclosing, elastic rubber bellows (100), wherein the inner chamber (102) surrounded by the bellows (100) is connected directly or indirectly to an additional volume (108) positioned outside the bellows (100) as a compensating chamber, **characterised in that** the additional volume (108) is arranged directly in the support (95) with a wheel suspension (70) having a height adjusting device (80) supported on a hollow profile of a support (95) of the body of the vehicle.

2. Wheel suspension according to 1, **characterised in that** the additional volume (108) is formed by elastic rubber bellows (106) connected to the inner chamber (102).

3. Wheel suspension according to either claim 1 or claim 2, **characterised in that** the additional volume (108) is connected via a connecting line (104) to the inner chamber (102) of the bellows (106).

4. Wheel suspension according to any one of the preceding claims, **characterised in that** the bellows (106) and the additional volume (108) are filled with dehumidified gas, in particular air.

5. Wheel suspension according to any one of the preceding claims, **characterised in that** the bellows (106) are arranged as an additional volume (108) in the hollow cavity of the support (95).

## Revendications

1. Suspension de roue pour véhicules automobiles avec réglage de niveau de la carrosserie, avec un dispositif de réglage de hauteur (80) qui est agencé entre un élément de guidage de roue et la caisse du véhicule automobile, qui est conçu notamment comme une vis à billes actionnée par électromoteur et qui agit sur une coupelle de ressort de réglage (34) d'au moins un ressort porteur (72), le dispositif de réglage de hauteur (80) étant étanchéifié par rapport à l'extérieur au moyen d'au moins un soufflet (100) enveloppant et élastique, l'espace intérieur (102) enveloppé par le soufflet (100) étant relié directement ou indirectement à un volume supplémentaire (108) positionné en dehors du soufflet (100) et servant d'espace de compensation, **caractérisée en ce que** dans le cas d'une suspension de roue (70) avec un dispositif de réglage de hauteur (80) appuyé à un profil creux d'un support (95) de la carrosserie du véhicule automobile, le volume supplémentaire (108) est agencé directement dans le support (95).

2. Suspension de roue selon la revendication 1, **caractérisée en ce que** le volume supplémentaire (108) est formé par un soufflet (106) élastique relié à l'espace intérieur (102).

3. Suspension de roue selon la revendication 1 ou 2, **caractérisée en ce que** le volume supplémentaire (108) est relié à l'espace intérieur (102) du soufflet (106) par l'intermédiaire d'un conduit de liaison (104).

4. Suspension de roue selon l'une des revendications précédentes, **caractérisée en ce que** le soufflet (106) et le volume supplémentaire (108) sont remplis d'un gaz déshumidifié, notamment de l'air.

5. Suspension de roue selon l'une des revendications précédentes, **caractérisée en ce que** le soufflet (106) est agencé comme volume supplémentaire (108) dans l'espace creux du support (95).
